# EUROPÄISCHE PATENTSCHRIFT

(11) **EP 3 836 000 B1**
(45) Veröffentlichungstag und Bekanntmachung des Hinweises auf die Patenterteilung: **13.09.2023**
(21) Anmeldenummer: 20000404.2
(22) Anmeldetag: 06.11.2020
(51) Int. Cl.: G06K 7/00, G06K 17/00, G06Q 10/087, G06Q 50/28, G06Q 30/0645

(54) **SYSTEM FÜR DIE IDENTIFIZIERUNG, ZUORDNUNG UND ZÄHLUNG GESTAPELTER BEHÄLTER**
SYSTEM FOR IDENTIFYING, ASSIGNING AND COUNTING STACKED CONTAINERS
SYSTÈME D'IDENTIFICATION, D'ATTRIBUTION ET DE COMPTAGE DE RÉCIPIENTS EMPILÉS

(30) Priorität: 11.12.2019 IT 201900023604
(43) Veröffentlichungstag der Anmeldung: 16.06.2021
(73) Patentinhaber: Tanzer Maschinenbau Srl, 39011 Lana (BZ) (IT)
(72) Erfinder: Gufler, Matthias, 39015 San Leonardo in Passiria (BZ) (IT); Fliri, Adrian, 39020 Taufers im Münstertal (BZ) (IT); Tanzer, Peter, 39011 Lana (BZ) (IT)
(74) Vertreter: Oberosler, Ludwig

(56) Entgegenhaltungen:
- US-A1- 2008 319 575
- US-A1- 2018 039 802
- US-A1- 2019 318 137

## Beschreibung

Die Erfindung bezieht sich auf eine Vorrichtung für die Identifizierung, Zuordnung und Zählung starrer oder klappbarer Behälter unterschiedlicher Art und Form, z.B. von Steigen mit klappbaren Seitenwänden, unterschiedlicher Typologie, welche in Gruppen oder auch in zufälliger Reihenfolge, betreffend die Typologie oder betreffend die Art des Erkennungscode gestapelt sind, auf einer beweglichen Ladeplattform, z.B. von der Art "dolly" oder auf einer Ladeplattform, gestapelt sind, der Vorrichtung zugeführt werden. Die besagte Zählung kann getrennt nach Typologie der Behälter, nach Art des Codes oder der Erkennungseinrichtung oder/und nach Lieferant und/oder nach Vermieter, erfolgen, weiters erfolgt die Zählung, die Identifizierung und die Zuordnung der einzelnen Ladeplattformen.

In der Logistik z.B. der leeren, wieder verwendbaren Steigen für verschiedene Waren ist das Problem der Zählung der Steigen unterschiedlicher Typologie, welche mit verschiedenen Codes und/oder Erkennungseinrichtungen versehen sind, bzw. welche Eigentum unterschiedlicher Lieferanten oder Vermieter sind, und in Gruppen oder in zufälliger Reihenfolge auf beweglichen Ladeplattformen oder Paletten gestapelt sind, welche ihrerseits Eigentum unterschiedlicher Lieferanten oder Vermieter sind, bekannt. Die Zählung, die Identifizierung und die korrekte Zuordnung der einzelnen Steigen und der Ladeplattformen an den Lieferanten und/oder an den Vermieter ist die Grundbedingung für die korrekte Rückerstattung und für die Berechnung der Mietbeträge.

Es ist das Ablesen von Barcodes, von zweidimensionalen QR-Codes oder von anderen, an Behältern und an Ladeplattformen angebrachten Erkennungsmitteln, z.B. von der Art mit RFID-Transponder (Radio Frequency Identification System), welche mittels Antenne durch Hochfrequenz-Radiowellen aktiviert und eingelesen werden, bekannt, diese sind angebracht um deren Identifizierung, welche wesentlich für die Zuordnung der einzelnen Steigen und/oder Ladeplattformen an den Lieferanten und/oder Vermieter ist, zu ermöglichen. Diese Identifizierung ist nicht möglich wenn die besagten Codes oder Identifizierungsmittel versehentlich entfernt oder unleserlich gemacht worden sind, bzw. derart beschädigt worden sind, dass ihr Einlesen verfälscht wird. Ein weiteres Problem für die Identifizierung sind die Steigen ohne Codes oder Identifizierungsmittel welche somit nur aufgrund ihres Erscheinungsbildes welches, z.B. durch die geometrischen Formen, durch die Maßverhältnisse der Elemente und/oder die sichtbaren Oberflächen und durch die Farbmerkmale, definiert ist.

Aus der US 2008319575 A1 sind Systeme Methoden und Vorrichtungen für die Zuordnung und Verwaltung patientenspezifischer Behälter bekannt. Es ist eine Abgabevorrichtung für eine Gesundheitseinrichtung beschrieben welche eine Anzahl von Behältern zur Lagerung von medizinischem Zubehör umfasst, wobei einige der Behälter als patientenspezifische Behälter bezeichnet sind, welche Patienten zur Lagerung z.B. ihrer Medikamente zugewiesen werden sollen. Ein zentrales Server-Computersystem kann, in Verbindung mit einer Abgabevorrichtung die aktuelle und zukünftige Verwendung der patientenspezifischen Behälter überwachen und zuweisen. Die Zuweisung und Verwaltung der patientenspezifischen Behälter kann über das System durch Geräte erfolgen welche verteilt sind. Die Abgabevorrichtung ist mit dem zentralen Server-Computersystem verbunden, sie kann ein Möbel mit mehreren ausziehbaren Schubladen sein und mit einer Tastatur und einem Einlesegerät für Identifikationsbarcodes und/oder RFID-Codes zur Eingabe z.B. der spezifischen Daten von Patienten oder Schubladen, ausgestattet sein. Zwecks Entnahme patientenspezifischer Elemente kann ein Benutzer seine Identifikation über die Tastatur, das Einlesegerät oder eine Zugangsvorrichtung eingeben. Dieses Identifizierungs- und Zuweisungssystem sieht keine Zählung keine Identifizierung und Zuweisung der Schubladen (Lastpaletten) vor. Weiters ist keine Überprüfung der eingegebenen oder eingelesenen Daten mittels Bilderkennung vorgesehen.

Aus der US 2019318137 ist ein Verfahren zur Durchführung einer Bestandsaufnahme mehrerer Behälter bekannt, wobei jeder Behälter mit einer Identifikationsetikette versehen ist welche mit einem Cip, zwecks drahtloser Kommunikation (RFID), ausgestattet ist. Das Verfahren umfasst folgende Schritte umfasst: Bereitstellen einer Vorrichtung mit einem Portal zwecks Definition einer Fahrtrichtung, Bereitstellen eines bewegbaren Containers welcher eine Vielzahl von Behälter trägt, Bewegen des Containers durch das Portal hindurch und Einlesen des Kommunikations-Cip jedes Behälters. Dieses Verfahren umfasst nicht das Zählen der Behälter noch eine Überprüfung der erhobenen Daten mittels Bilderkennung. Der bewegbare Container wird weder identifiziert, noch gezählt.

Aus der US 20180039802 A1 eine RFID-Vorrichtung mit Erkennung mittels RFID-Transponder und ein Verfahren für die Zuweisung von RFID-Transponder bekannt, wobei eine Steuereinheit für das Einlesen der an Behältern und an Objekten angebrachten Transponder vorgesehen ist, dabei wird aus den Merkmalen der Trägerwelle jedes empfangenen RFID-Signals mindestens ein Positions- und/oder ein GeschwindigkeitsParameter erhoben und ein Objekt-Transponder, aufgrund des Einlesens der RFID-Information der entsprechenden Positionsparameter und/oder Geschwindigkeitsparameter, einem Behälter-Transponder zugeordnet. Die Vorrichtung sieht nicht das Zählen der einzelnen Objekte und/oder Behälter und die Überprüfung der von den RFID-Cips gelieferten Daten mittels Bildbearbeitung vor, weiters erfolgt keine Erhebung, Identifizierung, Zuweisung und/oder Zählung von Transportplattformen für die Behälter und/oder die Objekte statt.

Die Erfindung stellt sich die Aufgabe eine Vorrichtung für die schnelle und sichere Identifizierung, Zuordnung und Zählung von Behälter und Ladeplattformen oder Paletten unterschiedlicher Art zu schaffen, welche mit Identifizierungscodes oder Identifizierungsmittel versehen sind oder ohne diese sind, welche z.B. nach Typologie gruppiert oder in zufälliger Reihenfolge auf einer Ladeplattform, versehen mit eventuellem Identifizierungscode und/oder mit Identifizierungsmittel, gestapelt sind.

Zur Lösung dieser Aufgabe schlägt die Erfindung ein System gemäß Anspruch 1 vor. Das erfindungsgemäße System umfasst eine Identifizierungsstation, welche wesentlich aus folgenden Teilen besteht:
- ein feststehendes optisches Lesegerät für den Identifizierungs-Barcode der zugeführten Ladeplattformen,
- ein mobiles optisches Lesegerät, welches z.B. von einem Bediensteten betätigt wird, zum Einlesen eines Codes, z.B. eines SSCC-Codes (Serial Shipping Container Code), welcher am Stapel der, der Identifizierungsstation zugeführten, Behälter angebracht ist,
- eine Antenne mit Lesegerät für die von den RFID-Transpondern und/oder anderen Transponderarten, infolge ihrer, durch Aktivierung mittels Antenne, ausgesandten Codes,
- eine fotographische Erfassungsvorrichtung für die Bilderkennung welche in der Lage ist die Barcodes und/oder die zweidimensionalen QR-Codes zu lesen und Behälter und/oder Ladeplattformen ohne Codes oder Identifizierungsmittel oder mit Codes oder Identifizierungsmitteln welche unleserlich sind oder ein fehlerhaftes Einlesen bewirken würden, zu erkennen,
- ein zweites feststehendes Lesegerät zum Einlesen des Identifizierungscodes der Ladeplattform in Position für die fotographische Identifizierung mittels Bilderkennung,
- bekannte Vorrichtungen für die mechanische Zuführung und die Abführung der Ladeplattformen samt den gestapelten Behältern,
- ein Computersystem welches geeignet ist die, von den einzelnen Identifizierungs-Lesegeräten eingelesenen, Daten mit gespeicherten Daten, betreffend die Typologie der Behälter, der Ladeplattformen und der entsprechenden Lieferanten/Vermieter, zu vergleichen und zuzuordnen.

Das besagte Lesegerät mit Antenne für das Einlesen der, von den, an den einzelnen Behältern angebrachten, Transpondern ausgesandten, RFID-Codes, die Vorrichtung für die Bilderkennung und das Erkennen der Barcodes, zusammen mit dem zweiten Lesegerät für das Einlesen des Identifizierungscodes der Behälter, sind im Inneren einer Kabine mit Türen installiert, wobei diese die Funktion eines faradayschen Käfigs und einer Dunkelkammer erfüllt, um zu verhindern dass die von der RFID-Antenne und von den Transpondern ausgesandten Radiowellen nach außen, bzw. eventuelle interferierende Wellen von außen nach innen dringen und auch um zu verhindern dass Licht von außen nach innen dringt, welches direkt oder durch Reflexion die Erhebungen, welche von den Vorrichtungen für die Bilderkennung durchgeführt werden, welche mit spezifischer Beleuchtung ausgestattet sind, verfälschen könnte.

Vorteilhafterweise ist die Identifizierungskabine mit mehreren Türen, z.B.

Schiebetüren, an mehreren Seiten ausgestattet, so dass mehrere Zuführund Abführlinien für die Ladeplattformen mit zu identifizierenden gestapelten Behältern vorgesehen werden können. Im Inneren der besagten Kabine ist eine, gemäß vertikaler Achse drehbare oder verstellbare Auflage vorgesehen auf welcher die in die Kabine eingeführte Ladeplattform samt ihrer Last drehbar, bzw. verstellbar, ist so dass an einer Seite die Transponder, welche die RFID-Codes ausstrahlen, sich in einer idealen Position für das Einlesen mittels RFID-Einlesegerät samt Antenne, befinden und eventuell gleichzeitig an der gegenüberliegenden Seite die Oberfläche der Last mit oder ohne Barcodes für die fotographischen Erhebungen, zwecks Einlesen der Barcodes und für die Identifizierung mittels Bilderkennung, erfolgen kann. Vorteilhafterweise hat die Identifizierungskabine eine quadratische Grundfläche und die vorgenannten Einlese und Erhebungssysteme sind in zwei diagonal gegenüberliegenden Ecken vorgesehen. Diese Anordnung und die Rotation der Auflage ermöglichen auch das Einlesen / die Identifizierung an zwei oder vier gegeneinander anliegenden Stapeln welche auf die selbe Ladeplattform geladen sind. Vorteilhafterweise ist die Kabine an drei Seiten mit Türen ausgestattet welche dicht gegen elektromagnetische Wellen und lichtdicht sind, so dass drei Linien für die Zufuhr und die Abfuhr der Ladeplattformen vorgesehen werden können wodurch die Wartezeiten verkürzt werden können und welche auch als Wartestrecken genutzt werden können. Zwischen den besagten Zufuhr- und Abfuhrlinien können drehbare Wechsel vorgesehen sein welche eventuell auch das Rückführen der Ladeplattformen von einer Abführstrecke zu einer Zuführstrecke, z.B. infolge nicht zufriedenstellendem Einlesen.

Ein nicht erfindungsgemäßes Zähl-, Erkennungs- und Zuordnungsverfahren erfasst die folgenden Fasen:
1. Anbringen eines Codes, z.B. von der Art SSCC (Serial Shipping Container Code), z.B. mittels an der auf der Ladeplattform liegenden Last aufgeklebter selbstklebender Etikette, zwecks Identifizierung der Last sowie z.B. ihrer Herkunft; der besagt Code kann vom Lieferanten der Last oder während der Zuführfase der Last in Richtung Identifizierungskabine angebracht werden und wird vorzugsweise mittels einem, z.B. von einem Bedientesten betätigten, mobilen Lesegerät eingelesen;
2. Einlesen des Codes, z.B. Barcodes, welcher vorzugsweise an den vier Seiten der Ladeplattform mit der zu identifizierenden Last angebracht ist, mittels vorzugsweise entlang jeder der Zuführlinien in Richtung Identifizierungskabine fest installiertem Lesegerät;
3. Zuordnung der Last an die entsprechende Ladeplattform durch Zuordnung der obgenannten zwei Einlesewerte;
4. Verfahren der Ladeplattform samt Ladung entlang einer der Zuführstrecken in Richtung Identifizierungskabine (durch eine der vorher geöffneten Türen), Ablage der Ladplattform auf der rotierenden Auflage im Inneren der Kabine und anschließendes Verschließen aller Türen;
5. Einlesen des von den Transpondern gelieferten Codes (RFID) welche an einer bestimmten Art von Behältern angebracht sind, nachdem die besagten Transponder durch die Antenne aktiviert worden sind;
6. Einlesen (vorzugsweise gleichzeitig mit der vorhergehenden Fase 5) der Barcodes mittels fotographischer Erhebung und Bildverarbeitung zwecks Identifizierung der Steigen oder der Ladeplattformen, welche ohne Codes oder Identifizierungsvorrichtungen sind oder mit nicht lesbaren Codes ausgestattet sind, aufgrund der Geometrie und der Farbe der Steigen, bzw. der Ladeplattformen;
7. Einlesen (zweites) des Barcodes der Ladeplattform, vorzugsweise gleichzeitig mit der vorgenannten Phase 6, bzw. 5, durchgeführt;
8. Vergleich zwischen den vorgenannten Einlesewerte der Codes und den vom Bildverarbeitungssystem gelieferten Daten, mit Zählung der eindeutig erfassten Steigen aufgrund des Vergleiches zwischen den Codes und der von der entsprechenden Bildverarbeitung gelieferten Bestätigungswerte;
9. Zählung der Gesamtanzahl der auf der Ladeplattform abgelegten Steigen aufgrund der von der Bildverarbeitung gelieferten Werte welche mindestens teilweise von den Einlesewerten der Codes (Barcodes, zweidimensionale QR-Codes, RFID) bestätigt sind;
10. Erkennen der fehlenden Steigen durch Vergleich mit der durch die Bilderkennung festgestellten Gesamtanzahl und Erkennen der besagten fehlenden Steigen durch Bearbeitung der Bilder aufgrund der erfassten Geometrie und Farben;
11. im Fall der Feststellung eines Zählfehlers wird, mittels eines Rechenverfahrens, das von den Transpondern ausgesandte Signal (RFID), welches energetisch niedrigeres Niveau hat, modifiziert bis dieses modifizierte Signal einem der Codes welche durch die Bilderkennung erhoben worden sind, bzw. einem der Daten welche durch die Erkennung aufgrund der Geometrie und die Farben der Behälter, bzw. der Daten welche im Speicher des Computers, aufscheinen, zugeordnet werden kann;
12. nach dem Zählen der Steigen (exaktes Ergebnis), wird das Resultat der Zählung, zusammen mit dem Code der entsprechenden Ladeplattform, dem System, zwecks Zuordnung z.B. an die entsprechenden Kundschaften/Lieferanten/Vermieter, zugesandt;
13. Transfer der Ladeplattform zusammen mit Ihrer Last auf eine der Abführlinien oder, im Fall eines nicht zufriedenstellenden Zählergebnisses, Rückführung in den Identifizierungszyklus durch Transfer auf eine Zuführlinie.

Die obgenannte Fase 11 des Verfahrens umfasst einen in der Identifizierung mittels RFID-Code bekannten und im Fall von Schwierigkeiten der Zuordnung zwischen besagtem RFID-Code und den von der Bildverarbeitung gelieferten Daten mit Erfolg angewandten, Arbeitsvorgang.

Die obgenannte Fase 13 mit Wiederholung des Identifizierungs-Zyklus kann, z.B. im Fall nicht erfolgter oder nur teilweiser Abnahme der Lastabdeckung aus transparenter Folie welche die Last zusammenhält und das Verrutschen einzelner gestapelter Behälter verhindert und/oder z.B. im Fall von nicht leserlichen oder teilweise abgedeckten Barcodes oder QR (zweidimensionale Barcodes), erforderlich sein.

Das obgenannte Verfahren ermöglicht das Zählen und die Identifizierung zwecks Zuordnung, z.B. an einen oder mehrere Lieferanten/Kunden/Vermietern, insbesondere von Behältern unterschiedlicher Art, welche mit Identifizierungs-Codes verschiedener Art versehen oder nicht versehen sind und, z.B. nach einer Art oder in zufälliger Reihenfolge gruppiert, so gestapelt sind, dass sie einen oder mehrere Stapel bilden welche mittels einer beweglichen Ladeplattform, z.B. von der Art "dolly" oder, mit Identifikationscode versehenen, Paletten transportierbar sind, wobei durch das kombinierte Identifizierungssystem durch Einlesen der Codes und Wertung der Daten welche von der Bildverarbeitung geliefert werden, eine hohe Präzision gesichert wird.

Die Erfindung wird anhand eines, in den beigelegten Zeichnungen schematisch dargestellten, vorzuziehenden Ausführungsbeispiels einer erfindungsgemäßen Identifizierungs- Zuordnungs- und Zählvorrichtung näher erklärt, dabei erfüllen die Zeichnungen rein erklärenden, nicht begrenzenden Zweck.

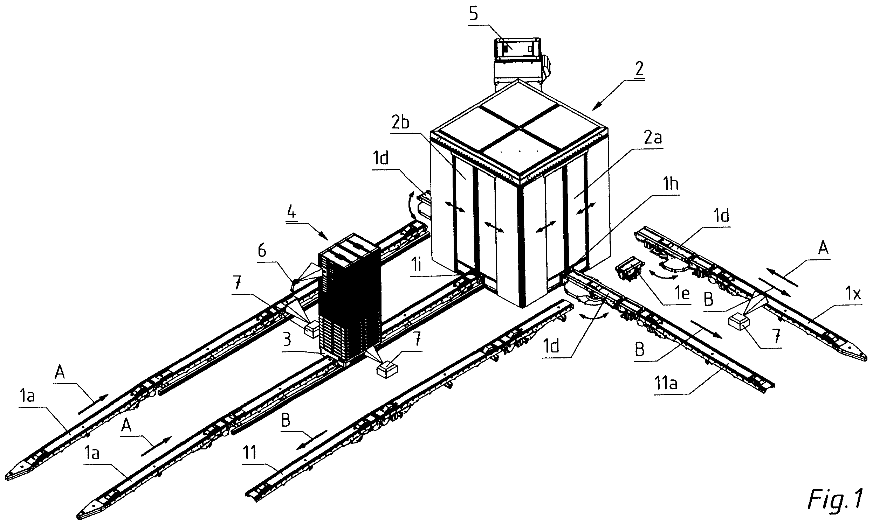

Die Fig. 1 zeigt in perspektivischer Darstellung die erfindungsgemäße Identifizierungs-, Zuordnungs- und Zählvorrichtung mit der Identifizierungskabine mit quadratischer Grundfläche und mit Schiebetüren an drei Seiten, mit zwei Zuführlinien für die Ladeplattformen samt Ladung, mit zwei Abführlinien und einer Linie mit Doppelfunktion Zufuhr/Abfuhr und mit einer beweglichen Ladeplattform samt Last, welche entlang einer Zuführlinie in Richtung Kabine bewegt wird und an welcher der an der Last angebrachte Code (SSCC) mittels, von einem Bediensteten betätigtem, beweglichem Einlesegerät, eingelesen wird und an dessen Ladeplattform mittels fest installiertem Einlesegerät der Identifizierungscode eingelesen wird.

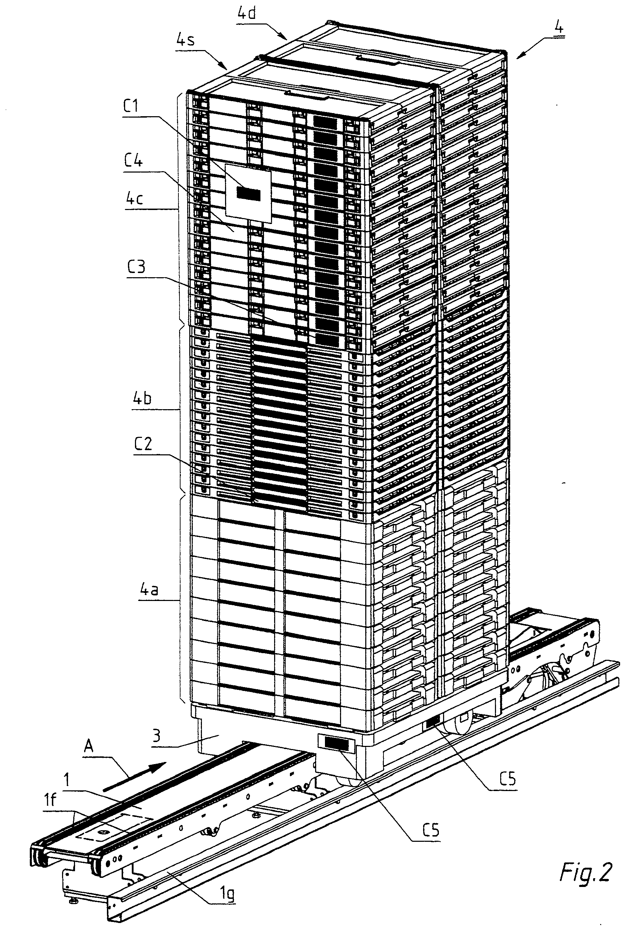

Die Fig. 2 zeigt in perspektivischer Darstellung eine Ladeplattform samt ihrer Last auf einer Kettenförderlinie, die Ladeplattform ist an vier Seiten mit einem Barcode versehen und kann mit einem RFID-Code versehen sein welcher, infolge Aktivierung, einen Identifizierungscode aussendet, auf der Ladeplattform sind zwei Stapel von, gemäß drei unterschiedlichen Arten, gruppierten Steigen mit klappbaren Seitenwänden abgelegt, die besagte Last bestehend aus zwei seitlich anliegenden Stapeln ist mit einem Barcode der Art SSCC auf selbstklebender Trägerfolie versehen.

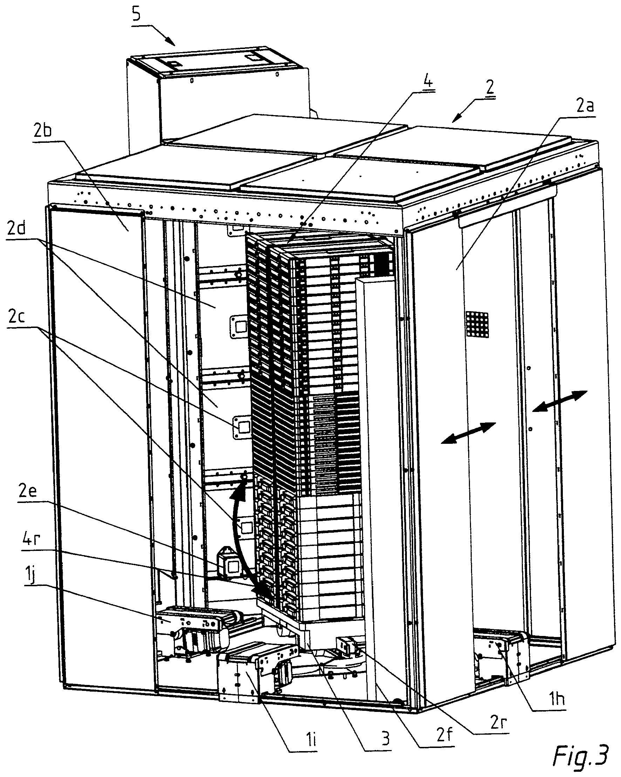

Die Fig. 3 zeigt in perspektivischer Darstellung die Identifizierungskabine welche die Funktion eines faradayschen Käfigs und einer "Dunkelkammer" hat, die Schiebetüren sind an zwei Seiten in geöffneter Position, die in Fig. 2 gezeigte Ladeplattform samt ihrer Last im Inneren der Kabine ist auf der rotierenden Auflage abgelegt und ist an einer Seite dem Einlesen der Identifizierungscodes (RFID) durch Aktivieren der Transponder, welche an einer bestimmten Art von Steigen und eventuell an der Ladeplattform vorgesehen sind, mittels Antenne welche elektromagnetische Wellen mit hoher Frequenz ausstrahlt und, an der diametral gegenüberliegenden Seite, dem Einlesen der Identifizierungs-Barcodes mittels digitalen Fotokameras, ausgesetzt; die Bilder werden weiters, zwecks Identifizierung der Steigen ohne Identifizierungscode und, betreffend die Art der mit Identifizierungscode ausgestatteten Steigen, einer Bilderkennung unterzogen um, durch Vergleich der Einlesewerte, die Richtigkeit der entsprechenden Identifizierungscodes zu überprüfen.

Die Identifizierungsvorrichtung besteht aus einer Identifizierungskabine 2 welche die Funktion eines faradayschen Käfigs und einer "Dunkelkammer" hat, sie ist an drei Seiten mit Schiebetüren 2a, 2b für den Durchgang der beweglichen Ladeplattformen oder Paletten 3 samt ihrer Last 4 von Steigen mit klappbaren Seitenwänden unterschiedlicher Art 4a, 4b, 4c welche in zwei seitlich anliegenden Stapeln 4s, 4d angeordnet sind, versehen. Im Zentrum dieser Kabine 2 ist eine drehbare Auflage 2r vorgesehen auf welcher die bewegliche Ladeplattform oder Palette 3 samt Last 4 abgelegt wird, welche entlang einer der Zuführlinien 1a mit Transportkette oder -band 1 oder entlang der "zweiwertigen" Linie Zufuhr/Abfuhr 1x, über die Verbindungselemente 1h, 1i welche mit den einzelnen Zuführlinien 1a und Abführlinien 11a in einer Linie ausgerichtet sind, bzw. über das Verbindungselement 1j welches mittels schwenkbarer Weiche 1d mit der Zuführlinie 1a verbindbar ist, zugeleitet werden. Die Abführlinien 11, 11a und die "zweiwertige" Zufuhr/Abfuhr Linie 1x sind unter sich und mit dem Verbindungselement 1h, mittels schwenkbarer Weiche 1d und einem eventuellen Brückenelement 1e, verbindbar.

Die Zuführlinien 1a und Abführlinien 11a, die schwenkbaren Weichen 1d, die Verbindungselemente 1h, 1i, 1j, die eventuellen Brückenelemente 1e und die drehbare Ablage 2r sind vorzugsweise von der Art mit Förderketten 1f oder Förderbänder welche auf die mobile Ladeplattform oder Palette 3 wirken.

Entlang der Zuführlinien 1, 1a und der zweiwertigen Linie 1x ist jeweils eine feste Lesestation 7 für das optische Einlesen einer der Bar-Identifizierungscodes C5 vorgesehen welche an den vier Seiten der mobilen Ladeplattform oder Palette 3 angebracht sind.

Die Kabine 2 hat vorzugsweise eine quadratische Grundfläche und ist im zentralen Bereich der Grundfläche mit der obgenannten drehbaren 4r Ablage 2r ausgestattet, weiters ist sie in zwei diametral sich gegenüberliegenden Ecken mit einer Antenne 2f, bzw. mit einer Vorrichtung für fotographische Erhebungen 2c, 2d zwecks Bilderkennung, ausgestattet. Die Antenne 2f für die Aussendung elektromagnetischer Wellen mit hoher Frequenz hingegen dient für die Aktivierung der, an einer bestimmten Art 5c von Steigen, bzw. auch an der mobilen Ladeplattform oder Palette 3, vorgesehenen, Transponder und um den von diesen Transpondern, infolge der besagten Aktivierung, ausgesandten Identifizierungscode C4, zu empfangen. Die Fotoausrüstung besteht aus einer Reihe von vertikal übereinander angeordneten, mit Beleuchtung ausgestatteten, Fotokameras 2c für die Aufnahme einer Seite der Last 4, bzw. für die Aufnahme einer Seite eines der sich seitlich berührenden Stapel 4s, 4d welche die Gesamtlast 4 bilden, um die einzelnen Steigen 4b, 4c, aufgrund ihres Barcodes C2, C3, zu identifizieren, bzw. um die Steigen 4a ohne Identifizierungscode oder Steigen mit unleserlichem oder fehlendem Code, aufgrund ihrer Geometrie und Ihrer Farbe zu identifizieren. Vorzugsweise ist im selben Bereich der Fotokameras 2c in niedriger Position, auf der Höhe der, auf der rotierenden Ablage 2r liegenden mobile Ladeplattform oder Palette 3, ein Einlesegerät 2e für den, an der Ladeplattform 3 vorgesehenen, Bar-Identifizierungscode C5 vorgesehen.

Die rotierende Ablage 2r ermöglicht es, insbesondere für die fotographischen Aufnahmen, jene Seite der einzelnen Stapel 4s, 4d welche die Last 4 bilden, zwecks Minimierung der Einlesefehler der Identifizierungscodes (C2, C3), in eine ideale Position zu drehen, bzw. um die fotographischen Aufnahmen für die Bilderkennung zwecks Identifizierung, aufgrund der geometrischen und chromatischen Merkmale, zu optimieren.

Alle Daten welche durch Einlesen der Identifizierungscodes C1, C2, C3, C4, C5 und die Daten der Bilderkennung aufgrund der, durch die Fotokameras 2c, gelieferten Bilder erhoben werden, werden einem programmierten Computer, zwecks Vergleich der von den Codes gelieferten Daten mit den entsprechenden Daten der Bildbearbeitung, zugeleitet, um auf diese Weise, aufgrund des vorgenannten Vergleiches, das exakte Zählergebnis der Steigen sichern zu können. Eventuelle von den Transpondern gelieferte Daten der Identifizierungscodes C4 welche sich als kaum zuverlässig erweisen sollten, werden auf bekannte Weise aufgrund eines Algorithmus manipuliert so dass diese den, von der Bildbearbeitung gelieferten Daten, bzw. den entsprechenden erhobenen Daten oder den gespeicherten Identifizierungsdaten, zugeordnet werden können. Auf diese Weise und wegen des Vergleichs zwischen den Daten verfügt man über verifizierte und verlässliche Daten für die nachfolgende Zuordnung der individuell erhobenen Daten an gespeicherte Daten welche z.B. die Lieferanten und/oder Vermieter der Steigen und/oder der Ladeplattformen betreffen.

## Patentansprüche

1. System für die Identifizierung, Zuordnung und Zählung von Behältern unterschiedlicher Art (4a, 4b, 4c), wobei das System die Behälter (4a, 4b, 45c) und eine mobile Plattform (3) oder Palette sowie Transponder umfasst, wobei die Transponder an den Behältern und/oder an der mobilen Ladeplattform (3) oder Palette angebracht sind und geeignet sind erste Identifizierungscodes (C2) auszustrahlen, wobei die Behälter (4a, 4b, 4c) eine Gesamtlast (4) bilden, mit zweiten Identifizierungscodes (C3, C4), welche Barcodes sind, versehen sind und nach ihrer jeweiligen Art oder in zufälliger Reihenfolge gruppiert auf der Plattform (3) oder der Palette gestapelt sind, wobei die besagte mobile Ladeplattform (3) oder Palette mit einem dritten Identifizierungscode (C5), welcher
ein Barcode ist, versehen ist,
**dadurch gekennzeichnet,**
**dass** das System weiters aus einer Identifizierungskabine (2) und einer Lesestation (2e) besteht, wobei die Identifizierungskabine in ihrem Inneren mindestens eine Antenne (2f) umfasst welche für die Aktivierung der Transponder und für den Empfang der von diesen ausgestrahlten ersten Identifizierungscodes (C2) ausgelegt ist und mindestens eine fotografische Vorrichtung umfasst, welche aus mindestens einer Fotokamera (2c) mit Beleuchtung (2d) besteht, wobei die Fotokamera (2c) zum Erfassen und Lesen der besagten zweiten Identifizierungscodes (C3, C4) und für die Bereitstellung von Identifizierungsdaten, welche aus Geometrie und Farben der unterschiedlichen Behälterarten (4a, 4b, 4c) und/oder der mobilen Ladeplattform (3) oder Palette erarbeitet werden, ausgelegt ist und wobei die Lesestation (2e) zum Lesen des dritten Identifizierungscodes (C5) ausgelegt ist,
**dass** das System weiters aus mindestens einer festen, entlang einer Zuführlinie, oder Zuführlinien (1a, 1x), für die mobile Ladeplattform (3) oder Palette zur Identifizierungskabine (2) plazierten ersten Einlesestation (7) für den dritten Identifizierungscode (C5), aus einer zweiten, mobilen oder festen, Einlesestation (6) zum Einlesen eines an der Gesamtlast (4) angebrachten vierten Identifizierungscodes (C1) und eines, zum Lesen der ersten, zweiten und dritten Identifizierungscodes (C2; C3, C4; C5) und zum Vergleichen und Zuordnen der ersten, zweiten und dritten Identifizierungscodes mit entsprechenden, von der fotografischen Vorrichtung gelieferten Identifizierungsdaten ausgelegten Computer mit Datenspeicher, besteht.

2. System gemäß Anspruch 1, **dadurch gekennzeichnet, dass** im Inneren der Identifizierungskabine (2) eine rotierende Ablage vorgesehen ist, welche geeignet ist, die verschiedenen Seitenflächen der, zusammen mit der mobilen Ladeplattform oder Palette (3), abgelegten Gesamtlast (4), bzw. die Seitenflächen der Stapel (4s, 4d), welche die Gesamtlast (4) bilden, in eine optimale Position für die Erhebungen mittels Fotokameras (2c), bzw. für das Einlesen der von den Transpondern, infolge Aktivierung durch die Antenne (2f), ausgestrahlten Codes zu bringen.

3. System gemäß Anspruch 1, **dadurch gekennzeichnet, dass** die Identifizierungskabine (2) als faradayscher Käfig und als Dunkelkammer wirkt und mit mindestens einer seitlichen Tür (2a, 2b) für den Durchgang der mobilen Ladeplattform (3) oder der Palette samt Ihrer zu identifizierenden Gesamtlast (4) versehen ist.

4. System gemäß Anspruch 1, **dadurch gekennzeichnet, dass** längs der Zuführstrecke der mobilen Ladeplattform (3), bzw. der Palette, mit der Gesamtlast (4) der Behälter (4a, 4b, 4c) mittels der ersten oder zweiten Einlesestationen (6, 7) das Einlesen des dritten Identifizierungscodes (C5) der mobilen Ladeplattform (3) oder Palette, bzw. des Identifizierungscodes (C1) der Gesamtlast (4) erfolgt,
dass anschließend die Identifizierungskabine (2) gleichzeitig oder aufeinanderfolgend das optische Einlesen der an den Behältern (4b, 4c) und an der Ladeplattform oder Palette (3) angebrachten ersten (C2), zweiten (C3) und dritten (C5) Identifizierungscodes und die fotographische Erhebung aller Behälter (4a, 4b, 4c), zwecks Bilderkennung, erfolgt, um die entsprechenden Daten für die Bestimmung der Geometrie und der Farbe der einzelnen Arten der Behälter (4a, 4b, 4c) und eventuell der Ladeplattform (3) oder Palette zu liefern,
dass das Einlesen der Codes (C4), welche von den durch die Antenne (2f) aktivierten Transpondern ausgesandt werden, erfolgt,
dass mittels Computer mit Datenspeicher die über das Einlesegerät (7) erhobenen Daten des dritten Identifizierungscodes (C5) der Ladeplattform oder Palette (3), den über das Einlesegerät (6) erhobenen Daten des vierten Identifizierungscodes (C1) der Gesamtlast (4), zugeordnet werden, und
dass die Daten der optischen Erhebung der zweiten und dritten Identifizierungscodes (C2, C3, C5) jedes einzelnen Behälters (4b, 4c), bzw. der Ladeplattform oder Palette (3) mit den entsprechenden Daten der Bilderkennung verglichen werden, um mit Sicherheit die einzelnen Behälter (4a, 4b, 4c), sowie die einzelnen Ladeplattformen oder Paletten (3), zwecks einer präzisen Zählung, bestimmen zu können.

## Claims

1. A system for identifying, associating and counting containers of different types (4a, 4b, 4c), wherein the system comprises the containers (4a, 4b, 4c) and a movable platform (3) or pallet as well as transponders, wherein the transponders are mounted on the containers and/or on the movable loading platform (3) or pallet and are suitable for emitting first identification codes (C2), wherein the containers (4a, 4b, 4c) form a total load (4), are provided with second identification codes (C3, C4), which are barcodes, and are stacked on the platform (3) or pallet in a manner grouped according to their respective type or in a random order, wherein said movable loading platform (3) or pallet is provided with a third identification code (C5), which is a barcode, **characterized in that** the system further consists of an identification booth (2) and a reading station (2e), wherein the identification booth comprises, in its interior, at least one antenna (2f) which is designed to activate the transponders and to receive the first identification codes (C2) emitted by the latter, and comprises at least one photographic device which consists of at least one photo camera (2c) with illumination means (2d), wherein the photo camera (2c) is designed to capture and read said second identification codes (C3, C4) and to provide identification data compiled from the geometry and colours of the different container types (4a, 4b, 4c) and/or of the movable loading platform (3) or pallet, and wherein the reading station (2e) is designed to read the third identification code (C5), and **in that** the system further consists of at least one stationary first read-in station (7) for the third identification code (C5), said first read-in station being placed along one or more supply lines (1a, 1x) for supplying the movable loading platform (3) or pallet to the identification booth (2), of a second, movable or stationary, read-in station (6) for reading in a fourth identification code (C1) applied to the total load (4), and of a computer with a data memory, said computer being designed to read the first, second and third identification codes (C2; C3; C4; C5) and to compare and associate the first, second and third identification codes with corresponding identification data supplied by the photographic device.

2. The system according to claim 1, **characterized in that** provided in the interior of the identification booth (2) is a rotating support which is suitable for bringing the different side faces of the total load (4), deposited together with the movable loading platform or pallet (3), or the side faces of the stacks (4s, 4d) forming the total load (4), into an optimal position for capture by means of photo cameras (2c) or for reading in the codes emitted by the transponders as a result of activation by the antenna (2f).

3. The system according to claim 1, **characterized in that** the identification booth (2) acts as a Faraday cage and as a dark room and is provided with at least one side door (2a, 2b) for the passage of the movable loading platform (3) or pallet together with its total load (4) to be identified.

4. The system according to claim 1, **characterized in that** the third identification code (C5) of the movable loading platform (3) or pallet, and/or the identification code (C1) of the total load (4), is read in by means of the first or second read-in stations (6, 7) along the supply path of the movable loading platform (3) or pallet comprising the total load (4) of the containers (4a, 4b, 4c), **in that** subsequently, at the identification booth (2), the first (C2), second (C3) and third (C5) identification codes applied to the containers (4b, 4c) and to the loading platform or pallet (3) are optically read in and, at the same time or thereafter, all the containers (4a, 4b, 4c) are photographically captured for the purpose of image recognition in order to supply corresponding data for determining the geometry and the colour of the individual types of container (4a, 4b, 4c) and optionally the loading platform (3) or pallet, **in that** the codes (C4) emitted by the transponders activated by the antenna (2f) are read in, **in that** the data from the third identification code (C5) of the loading platform or pallet (3), captured via the read-in unit (7), and the data from the fourth identification code (C1) of the total load (4), captured via the read-in unit (6), are associated by means of the computer with the data memory, and **in that** the data from the optical capture of the second and third identification codes (C2, C3, C5) of each individual container (4b, 4c), and/or of the loading platform or pallet (3), are compared with the corresponding image recognition data in order to be able to determine, with certainty, the individual containers (4a, 4b, 4c), and the individual loading platforms or pallets (3), for the purpose of precise counting.

## Revendications

1. Système d'identification, d'affectation et de comptage de conteneurs de différents types (4a, 4b, 4c), ledit système comprenant lesdits conteneurs (4a, 4b, 45c) et une plate-forme mobile (3) ou palette, ainsi que des transpondeurs, lesdits transpondeurs étant fixés auxdits conteneurs et/ou à ladite plate-forme mobile de chargement (3) ou palette et étant aptes à émettre des premiers codes d'identification (C2), les conteneurs (4a, 4b, 4c) formant une charge totale (4), étant munis de deuxièmes codes d'identification (C3, C4), qui sont des codes à barres, et étant empilés sur la plate-forme (3) ou palette selon leur type respectif ou dans un ordre aléatoire, ladite plate-forme mobile de chargement (3) ou palette étant munie d'un troisième code d'identification (C5), qui est un code à barres,
**caractérisé en ce que** le système comprend en outre une cabine d'identification (2) et une station de lecture (2e), la cabine d'identification comprenant à l'intérieur au moins une antenne (2f) adaptée à l'activation des transpondeurs et à la réception des premiers codes d'identification (C2) émis par ceux-ci et au moins un dispositif photographique constitué d'au moins une caméra photographique (2c) avec éclairage (2d), la caméra photographique (2c) étant prévue pour saisir et lire lesdits deuxièmes codes d'identification (C3, C4) et pour fournir des données d'identification élaborées à partir de la géométrie et des couleurs des différents types de conteneurs (4a, 4b, 4c) et/ou de la plate-forme mobile de chargement (3) ou palette, la station de lecture (2e) étant prévue pour lire le troisième code d'identification (C5),
**en ce que** le système comprend en outre au moins une première station fixe de lecture (7) du troisième code d'identification (C5) placée le long d'une ligne ou de lignes d'amenée (1a, 1x) de la plate-forme mobile de chargement (3) ou palette vers la cabine d'identification (2), une deuxième station de lecture (6) mobile ou fixe pour la lecture d'un quatrième code d'identification (C1) appliqué à la charge totale (4) et un ordinateur pour saisir les premier, deuxième et troisième codes d'identification (C2; C3, C4 ; C5) et pour comparer et associer les premier, deuxième et troisième codes d'identification à des données d'identification correspondantes fournies par le dispositif photographique.

2. Système selon la revendication 1, **caractérisé en ce qu'**il est prévu à l'intérieur de la cabine d'identification (2) un plateau rotatif apte à présenter les différentes faces latérales de la charge totale (4) déposée avec la plate-forme de chargement mobile ou palette (3), voire les faces latérales des piles (4s , 4d) constituant la charge totale (4), dans une position optimale pour les relevés par caméras photographiques (2c), voire pour la lecture des codes émis par les transpondeurs, suite à leur activation par l'antenne (2f).

3. Système selon la revendication 1, **caractérisé en ce que** la cabine d'identification (2) agit comme une cage de Faraday et une chambre noire et est munie d'au moins une porte latérale (2a, 2b) pour le passage de la plate-forme de chargement mobile (3) ou palette avec sa charge totale (4) à identifier.

4. Système selon la revendication 1, **caractérisé en ce que**, le long du trajet d'amenée de la plate-forme de chargement mobile (3) ou palette, avec la charge totale (4) des conteneurs (4a, 4b, 4c), la lecture du troisième code d'identification (C5) de la plate-forme de chargement mobile (3) ou palette ou du code d'identification (C1) de la charge totale (4) est effectuée au moyen des première ou deuxième stations de lecture (6, 7),
**en ce qu'**ensuite, la cabine d'identification (2) effectue simultanément ou successivement la lecture optique des premier (C2), deuxième (C3) et troisième (C5) codes d'identification apposés sur les conteneurs (4b, 4c) et sur la plate-forme de chargement ou palette (3), et le relevé photographique de tous les conteneurs (4a, 4b, 4c), aux fins de reconnaissance d'images, afin de fournir les données correspondantes pour la détermination de la géométrie et de la couleur de chaque type de conteneur (4a, 4b, 4c) et éventuellement de la plate-forme de chargement (3) ou palette,
**en ce que** la lecture des codes (C4) émis par les transpondeurs activés par l'antenne (2f) est effectuée,
**en ce que**, au moyen d'un ordinateur à mémoire de données, les données du troisième code d'identification (C5) de la plate-forme de chargement ou palette (3), relevées par l'appareil de lecture (7), sont associées aux données du quatrième code d'identification (C1) de la charge totale (4), relevées par l'appareil de lecture (6), et
**en ce que** les données du relevé optique des deuxième et troisième codes d'identification (C2, C3, C5) de chaque conteneur individuel (4b, 4c), voire de la plate-forme de chargement ou de la palette (3), sont comparées aux données correspondantes de la reconnaissance d'images afin de pouvoir déterminer avec certitude les conteneurs individuels (4a, 4b, 4c), ainsi que les platesformes de chargement ou palettes (3) individuelles, en vue d'un comptage précis.
